# EUROPÄISCHE PATENTSCHRIFT

(11) **EP 1 783 463 B1**
(45) Veröffentlichungstag und Bekanntmachung des Hinweises auf die Patenterteilung: **15.04.2015**
(21) Anmeldenummer: 06018925.5
(22) Anmeldetag: 09.09.2006
(51) Int. Cl.: G01D 5/347

(54) **Verfahren zum Befestigen eines Massstabs an einen Träger, dazu ausgebildeter Massstab sowie Träger mit diesem Massstab**
Method for fixing a scale to a support, thereto adapted scale and support with such a scale
Procédé pour la fixation d'une échelle sur un support, échelle adaptée et support avec une pareille échelle

(30) Priorität: 04.11.2005 DE 102005053088; 15.04.2006 DE 102006017708
(43) Veröffentlichungstag der Anmeldung: 09.05.2007
(73) Patentinhaber: Dr. Johannes Heidenhain GmbH, 83301 Traunreut (DE)
(72) Erfinder: Holzapfel, Wolfgang, 83119 Obing (DE); Drescher, Jörg, 83083 Riedering (DE); Speckbacher, Peter, 84558 Kirchweidach (DE); Weidmann, Josef, 83308 Trostberg (DE); Pucher, Wolfgang, 83346 Bergen (DE); Bauer, Kilian, 83278 Traunstein (DE)

(56) Entgegenhaltungen:
- DE-A1- 10 153 147
- DE-A1- 19 755 482
- US-A- 5 669 997
- US-A- 5 877 903

## Beschreibung

Die Erfindung betrifft ein Verfahren zum Befestigen eines Maßstabs an einen Träger.

Zur Messung der Relativlage zweier Maschinenteile ist an einem der Maschinenteile ein Maßstab zu befestigen und am anderen der zueinander beweglichen Maschinenteile eine Abtasteinheit. Bei der Positionsmessung wird eine Teilung des Maßstabs von der Abtasteinheit abgetastet.

Bei der Befestigung eines Maßstabs an einen Träger unterscheidet man zwei Grundprinzipien. Bei dem ersten Grundprinzip wird der Maßstab am Träger derart befestigt, dass er sich bei Temperaturänderungen gegenüber dem Träger frei ausdehnen kann. Die Befestigung erfolgt hier mittels in Messrichtung auslenkbarer Befestigungselemente oder mittels einer elastischen Klebeschicht.

Bei dem zweiten Grundprinzip wird der Maßstab am Träger starr befestigt. Dabei können Träger und Maßstab aus einem Material mit gleichem Ausdehnungskoeffizienten bestehen. Bestehen Träger und Maßstab aus unterschiedlichen Materialien, wird dem Maßstab das Temperaturverhalten des Trägers aufgezwungen. Die Befestigung erfolgt bei dem zweiten Grundprinzip über fest aushärtende dünne Klebeschichten oder über Ansprengen.

Zur hochgenauen Positionsmessung werden vorzugsweise Maßstäbe aus Glas oder Glaskeramik mit vernachlässigbarem Ausdehnungskoeffizienten eingesetzt. Diese Maßstäbe lassen sich gut bearbeiten, so dass hier das Ansprengen an Gegenflächen angewendet wird, wie in der DE 101 53 147 A1 beschrieben.

Das Problem beim Ansprengen eines Maßstabs ist, dass die Verbindung leicht durch Verunreinigungen oder Luftblasenbildung gestört sein kann. Weiterhin wird eine hohe Ebenheit der Verbindungsflächen gefordert, was einen hohen Aufwand erfordert. Diese Probleme treten verstärkt bei relativ großflächigen Maßstäben auf. Aus diesem Grund hat sich das Ansprengen von Maßstäben nicht durchgesetzt.

Diese Probleme ist auch allgemein beim Ansprengen von optischen Bauelementen bekannt. Zur Lösung dieses Problems wird in der US 5,669,997 A vorgeschlagen, die Ansprengverbindung durch eine Klebeverbindung zu ergänzen, indem in die Befestigungsfläche des Trägers eine Nut eingebracht wird, in die nach Herstellung der Ansprengverbindung Klebstoff durch Kapillarwirkung eingebracht wird.

Auch die DE 197 55 482 A1 beschreibt eine Möglichkeit, eine großflächige Ansprengverbindung durch eine Klebeverbindung zu ergänzen.

Diese Maßnahme kann die Probleme nicht vollständig beheben. So besteht weiterhin die Gefahr, dass die relativ großen Ansprengflächen sich durch eine einzige partielle Störung vollständig lösen. Weiterhin ist keine ausreichende Ebenheit gewährleistet.

Aufgabe der Erfindung ist es, ein Verfahren anzugeben, das diese Probleme behebt.

Gelöst wird diese Aufgabe durch ein Verfahren gemäß dem Anspruch 1.

Eine weitere Aufgabe der Erfindung ist es, einen Träger mit einem daran stabil befestigten Maßstab anzugeben.

Gelöst wird diese Aufgabe durch einen Träger gemäß dem Anspruch 7.

Weiterhin betrifft die Erfindung einen Maßstab mit den Merkmalen des Anspruchs 19.

Vorteilhafte Ausbildungen der Erfindung sind in den abhängigen Ansprüchen angegeben.

Durch die Erfindung werden die erreichbaren Vorteile des Ansprengens ausgenutzt, indem möglichst große Flächenkräfte als Haltekräfte aufgebracht werden und gleichzeitig aber die Nachteile des Ansprengens vermieden, indem viele voneinander getrennte Ansprengflächen gebildet werden.

Ein lokal durch Verunreinigungen bzw. durch Kratzer ausgelöstes Ablösen der Bondverbindung wird durch die erfindungsgemäße Trennung der Ansprengflächen begrenzt. Die Ablösung wird sich in der Regel durch die unterbrochene Bondverbindung nicht fortpflanzen.

Weiterhin wird eine gute Ebenheit des Maßstabs erzielt, da störende Medien durch den zumindest einen nach außen führenden Kanal entweichen können.

Ausführungsbeispiele der Erfindung werden anhand der Zeichnungen näher erläutert.

Es zeigen:
- Figur 1: einen ersten Maßstab und einen ersten Träger zur Befestigung des Maßstabs;
- Figur 2: den am Träger befestigten Maßstab gemäß Figur 1;
- Figur 3: einen Längsschnitt durch den Maßstab und den Träger gemäß Figur 2;
- Figur 4: einen zweiten Träger und einen zweiten Maßstab;
- Figur 5: den am Träger befestigten Maßstab gemäß Figur 4;
- Figur 6: einen dritten Träger und einen dritten Maßstab in Draufsicht;
- Figur 7: den am Träger befestigten Maßstab gemäß Figur 6 im Schnitt;
- Figur 8: zwei nebeneinander gezeichnete Varianten zur Ausbildung des dritten Maßstabs im Querschnitt;
- Figur 9: die zwei Varianten gemäß Figur 8 in Draufsicht;
- Figur 10: einen vierten Träger und einen vierten Maßstab;
- Figur 11: den vierten Träger und vierten Maßstab in Draufsicht;
- Figur 12: einen Querschnitt A-A aus Figur 11;
- Figur 13: eine vergrößerte Ansicht B aus Figur 12;
- Figur 14: eine vergrößerte Ansicht C aus Figur 11;
- Figur 15: einen fünften Träger und einen fünften Maßstab;
- Figur 16: den fünften Träger und fünften Maßstab in Draufsicht;
- Figur 17: einen Querschnitt A-A aus Figur 16;
- Figur 18: eine vergrößerte Ansicht B aus Figur 17 und
- Figur 19: eine vergrößerte Ansicht C aus Figur 16.

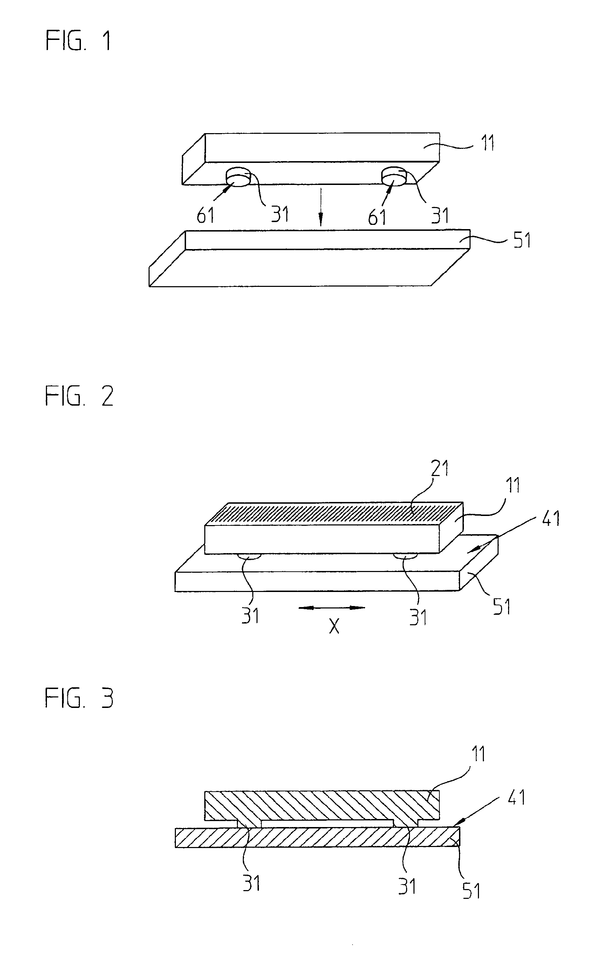

Anhand der Figuren 1 bis 3 wird das Prinzip des Ansprengens bzw. Bondens eines Maßstabs 11 erläutert. Dabei ist ein Maßstab 11 aus Glas oder Glaskeramik (z. B. ZERODUR) mit einer Messteilung 21 dargestellt. Die Messteilung 21 ist eine inkrementale Teilung, die zur Positionsmessung in Messrichtung X abtastbar ist. Die Messteilung 21 kann ein reflektierendes Amplitudengitter oder ein Phasengitter sein, das in bekannter Weise zur hochgenauen interferentiellen Positionsmessung dient. Der Maßstab 11 weist im Bereich seiner Besselpunkte Erhebungen 31 auf, die als Auflage zum Auflegen auf eine Gegenfläche 41 eines Trägers 51 dienen. Der Träger 51 besteht vorzugsweise ebenfalls aus Glas oder Glaskeramik (z. B. ZERODUR).

Die der Gegenfläche 41 des Trägers 51 gegenüberliegenden Oberflächen 61 der Erhebungen 31 sowie die Gegenfläche 41 sind saubere und hochgradig polierte Oberflächen. Die erforderliche Oberflächengüte wird durch mechanische abrasive Politur oder chemomechanische Politur erreicht.

Die Erhebungen 31 am Maßstab 11 werden vorzugsweise durch bekannte Strukturierungsverfahren erzeugt, indem die Bereiche der Erhebungen 31 abgedeckt werden und das Material um die Erhebungen 31 herum weggeätzt wird. Die Erhebungen 31 sind somit einstückig am Maßstab 11 ausgebildet.

Die Verbindung des Maßstabs 11 mit dem Träger 51 erfolgt durch Bonden der Oberflächen 61 der Erhebungen 31 mit der Gegenfläche 41 des Trägers 51. Grundlage des der Erfindung zugrundeliegenden Bondens ist die Adhäsion, indem saubere, paßfähige und polierte Oberflächen aneinander haften, wenn ihr Abstand in die Reichweite der atomaren Bindungskräfte gelangt. Bonden wird auch als optical contacting oder non-adhesive bonding bezeichnet. Die Oberflächen 61 der Erhebungen sind daher so ausgebildet, dass diese eine bondbare Oberfläche 61 zum Herstellen einer Bondverbindung mit der Gegenfläche 41 des Trägers 51 aufweisen.

Dieses Bonden kann das Direktbonden (direct bonding oder direct contacting) sein, das auch als Ansprengen bezeichnet wird. Beim Direktbonden kann die Bindungswirkung durch Wärmeeinwirkung erhöht werden, oder durch Aufbringen von oberflächenaktiver Mittel. Durch das Direktbonden mit oberflächenaktiven Mitteln wird eine gute Bondfestigkeit auch bei relativ niedrigen Temperaturen erreicht. Eine besondere Art von oberflächenaktiven Mitteln ist das Einbringen von auskristallisierender Flüssigkeit. Dieses Bondverfahren wird auch als Low-Temperature-Bonding-Technik (LTB) bezeichnet und ist in einer über das Internet zugängliche Abhandlung der Firma SCHOTT mit dem Titel: "SCHOTT Low Temperature Bonding for Precision Optics" von Carol Click, Leo Gilroy and Dave Vanderpool erläutert, auf die ausdrücklich Bezug genommen wird. Beim LTB-Verfahren besteht der Maßstab 11 und der Träger 51 jeweils aus Glaskeramik mit einem Ausdehnungskoeffizienten nahe Null, insbesondere ZERODUR.

Das Bonden kann auch ein anodisches Bonden sein, bei dem auf einem der miteinander zu verbindenden Oberflächen 61, 41 von Maßstab 11 oder Träger 51 eine metallische elektrisch leitende Hilfsschicht, z.B. Aluminium als Zwischenschicht zwischen den Erhebungen 31 und der Gegenfläche 41 aufgebracht ist. Diese Hilfsschicht kann eine aufgedampfte Schicht sein. Beim anodischen Bonden wird zwischen der Hilfsschicht und dem Träger 51 eine Spannung angelegt, so dass Ionen der Hilfsschicht in den Träger 51 und/oder Ionen des Trägers 51 in die Hilfsschicht wandern. Die angelegte Spannung generiert eine elektrostatische Anziehungskraft, welche einen atomaren Kontakt zwischen dem Maßstab und dem Träger bewirkt.

Vermehrt werden zur mehrdimensionalen Positionsmessung Maßstäbe 12 mit einer zweidimensionalen Messteilung 22 eingesetzt. Dabei werden relativ großformatige Maßstäbe 12 (beispielsweise 40 cm x 40 cm) auf einer Fläche 42 eines Maschinenteils 52 befestigt. Besonders bei LithographieGeräten, bei denen die Maschinenteile 52, an denen der Maßstab 12 zu befestigen ist, aus Glaskeramik (z.B. ZERODUR) mit einem Ausdehnungskoeffizienten nahe Null bestehen, ist die Erfindung vorteilhaft einsetzbar. Eine derartige Maschine mit einem Maßstab mit einer zweidimensionalen Messteilung ist in der US 2004/0263846 A1 erläutert, auf die hier Bezug genommen wird.

Dabei kann es erforderlich sein, dass mehrere Maßstäbe 12 zweidimensional nebeneinander mosaikartig auf einer Maschinenfläche 52 von beispielsweise 1 m x 2m befestigt werden müssen, um den erforderlichen Messbereich von etwa 1 m x 2m abzudecken. Die Maßstäbe 12 mit der insbesondere lichtelektrisch abtastbaren Messteilung 22 sind in der erforderlichen Präzision nämlich nur in Größen von etwa 40cm x 40cm fertigbar. Jeder dieser Maßstäbe 12 kann nun erfindungsgemäß am Träger 52 befestigt werden, wie in den nachfolgenden Figuren dargestellt ist.

Bei dieser Befestigung werden die oben erläuterten Bondverfahren erfindungsgemäß eingesetzt.

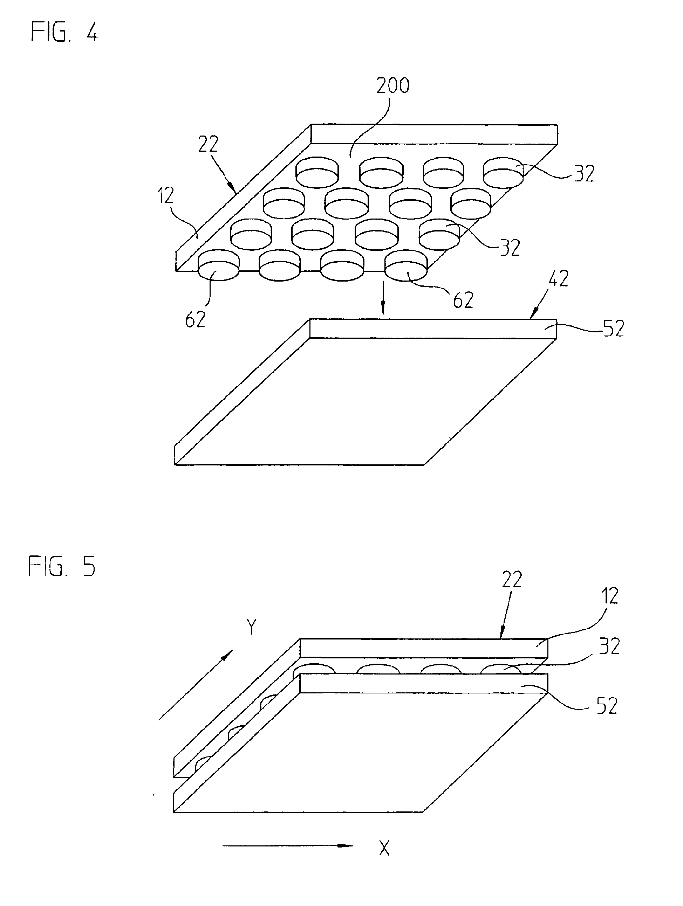

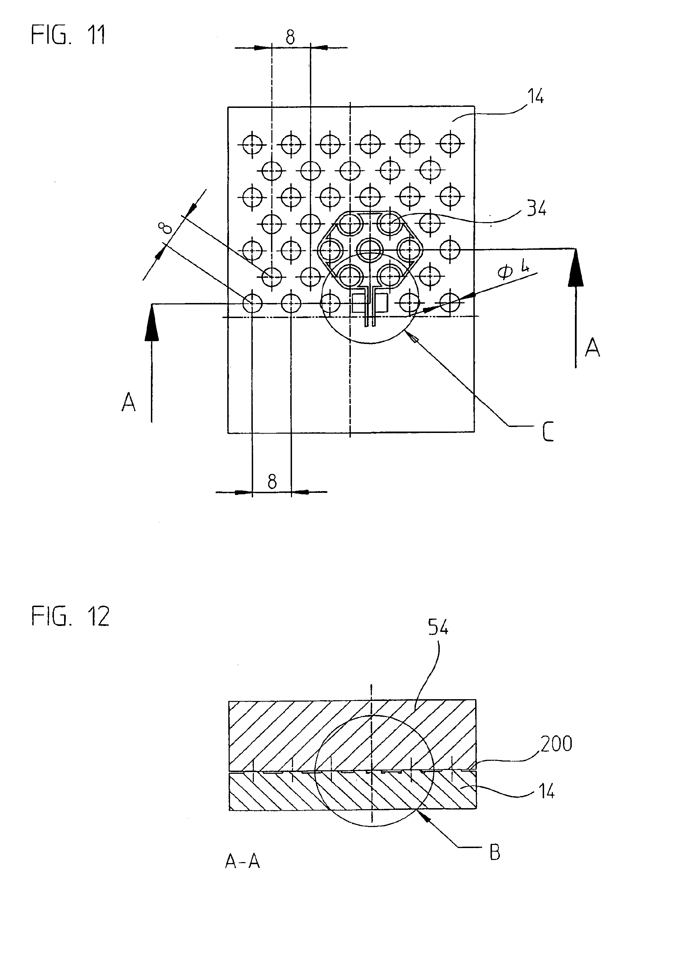

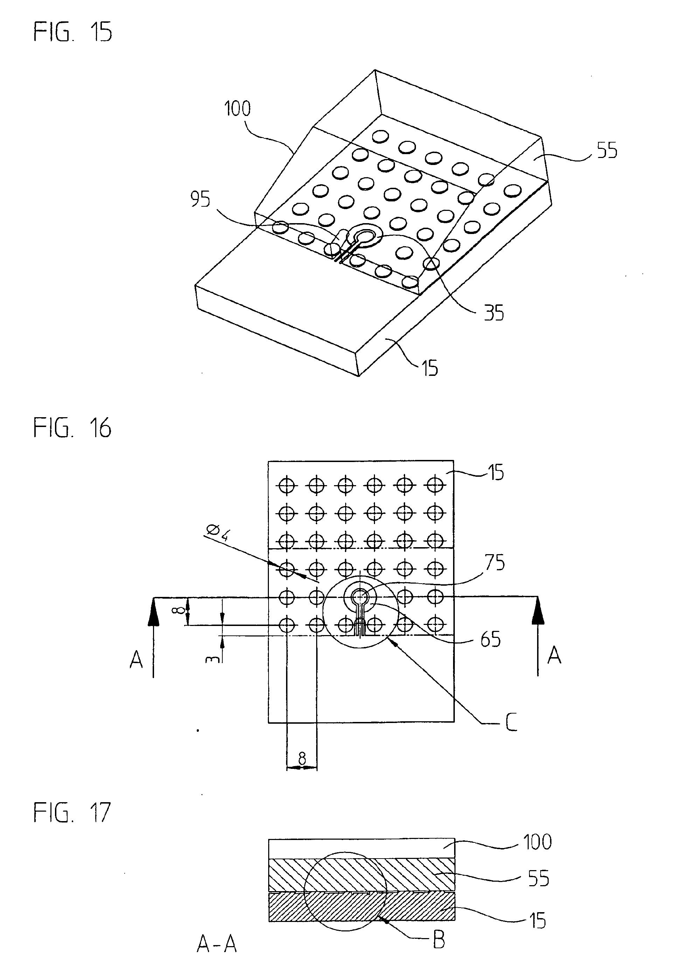

In den Figuren 4 und 5 ist ein derartiger Maßstab 12 mit einer zweidimensionalen Messteilung 22 - auch Kreuzgitter genannt - beispielhaft dargestellt. Auf der dem Träger 52 zugewandten Oberfläche des Maßstabs 12 sind Erhebungen 32 mit bondbaren Oberflächen 62 ausgebildet. Diese Erhebungen 32 sind gemäß der Erfindung zweidimensional räumlich verteilt angeordnet, entweder geometrisch gleichmäßig in einem regelmäßigen Raster verteilt oder statistisch verteilt. Die Erhebungen 32 können jeweils kreisförmig ausgebildet sein, mit einem Durchmesser kleiner 30 mm, typisch 200 µm bis 4 mm und mit einem gegenseitigen Abstand von vorzugsweise kleiner der Dicke des Maßstabs 12, wobei der gegenseitige Abstand der Randabstand ist, in den Figuren 11 und 16 also 4mm. Die Höhe der Erhebungen 32 ist in vorteilhafter Weise größer 10 nm, günstige Werte sind insbesondere 20 nm bis 50 µm. Die Ebenheit (Welligkeit) der Oberflächen 62 der Erhebungen 32 liegt im Bereich von kleiner 500 nm auf einem Durchmesser von ca. 10 mm, typisch 30 nm auf 10 mm. Die als Bondflächen ausgebildeten Oberflächen 62 der Erhebungen 32 liegen wiederum in einer gemeinsamen Ebene. Typische Werte für die Dicke des Maßstabs 12 liegen bei 1 bis 15 mm. Je kleiner der Durchmesser der Erhebungen 32 ist und je kleiner der gegenseitige Abstand, desto kleiner kann auch die Höhe der Erhebungen 32 ausgeführt sein.

Die zweidimensionale räumliche Verteilung der Erhebungen 32 sollte so erfolgen, dass zwischen den Erhebungen 32 Öffnungskanäle 200 entstehen, die - bezogen auf die X-Y-Ebene - bis zum Rand des Maßstabs 12 reichen. Durch diese Maßnahme können oberflächenaktive Mittel nach dem Bonden leicht aus dem Raum zwischen Maßstab 12 und Träger 52 entweichen. Weiterhin können Lufteinschlüsse über die gesamte Fläche des Maßstabs 12 über die Öffnungskanäle 200 leicht entweichen, was die Bondfestigkeit erhöht sowie eine gute Ebenheit des Maßstabs 12 sicherstellt.

Die Erhebungen 32 bilden eine Art Noppen und sind so ausgebildet, dass die Kanten - Übergänge zu den daneben liegenden Vertiefungen -, welche die Öffnungskanäle 200 bilden, abgerundet sind. Dadurch können die zu bondenden Oberflächen 62 besser gereinigt und ggf. oberflächenaktiviert werden. Ein weiterer Vorteil besteht darin, dass Angriffspunkte für das Ablösen vermieden werden und die Gefahr der Absplitterung von Material erheblich verringert wird.

Im Wartungsfall kann die Bondverbindung gelöst werden, indem über zumindest eine (nicht dargestellte) Bohrung im Träger 52 oder im Maßstab 12 in den Zwischenraum von Maßstab 12 und Träger 52 ein Medium, beispielsweise Druckluft, eingeführt wird und dadurch ein Druck aufgebaut wird, der Maßstab 12 und Träger 52 auseinander drängt.

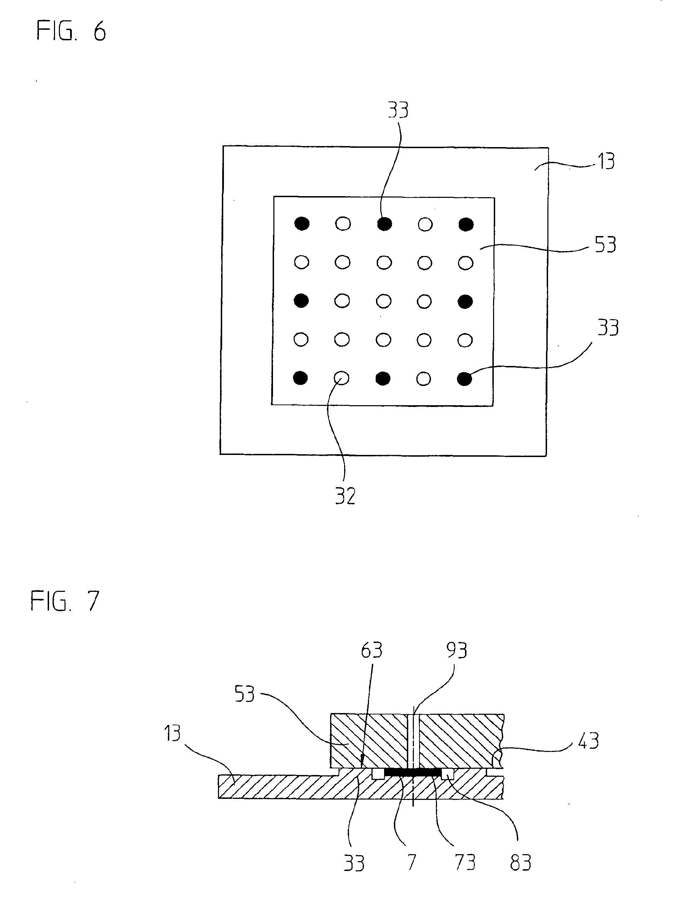

Insbesondere bei über den Träger 53 auskragenden Maßstäben 13 (beispielhaft in Figur 6 und 7 gezeigt) besteht die Gefahr, dass durch Schwingungserregung ein alternierendes Abschälen und wieder Ansprengen der Randbereiche des Maßstabs 13 entsteht. Dieser Vorgang führt zu unberechenbarer Veränderung der kurzperiodischen Längenabweichungen des auskragenden Maßstabsbereichs. Um dies zu vermeiden, sind zusätzliche Maßnahmen vorteilhaft. So kann eine zusätzliche Sicherung zum Halten des Maßstabs 11 bis 15 am Träger 51 bis 55 vorgesehen werden. Diese zusätzliche Sicherung können Halteelemente in Form von Federn, Halteklammern, magnetische Halteelemente, elektrostatische Klemmung oder Vakuumhalterungen sein oder es können Hafthalterungen wie Ölfilme oder Klebeverfahren eingesetzt werden. Diese zusätzliche Sicherung ist zumindest am Randbereich der Ansprengverbindung sinnvoll, also am Randbereich des Maßstabs 13 und / oder des Trägers 53, das heißt, am Randbereich der Überlappung von Maßstab 13 und Träger 53.

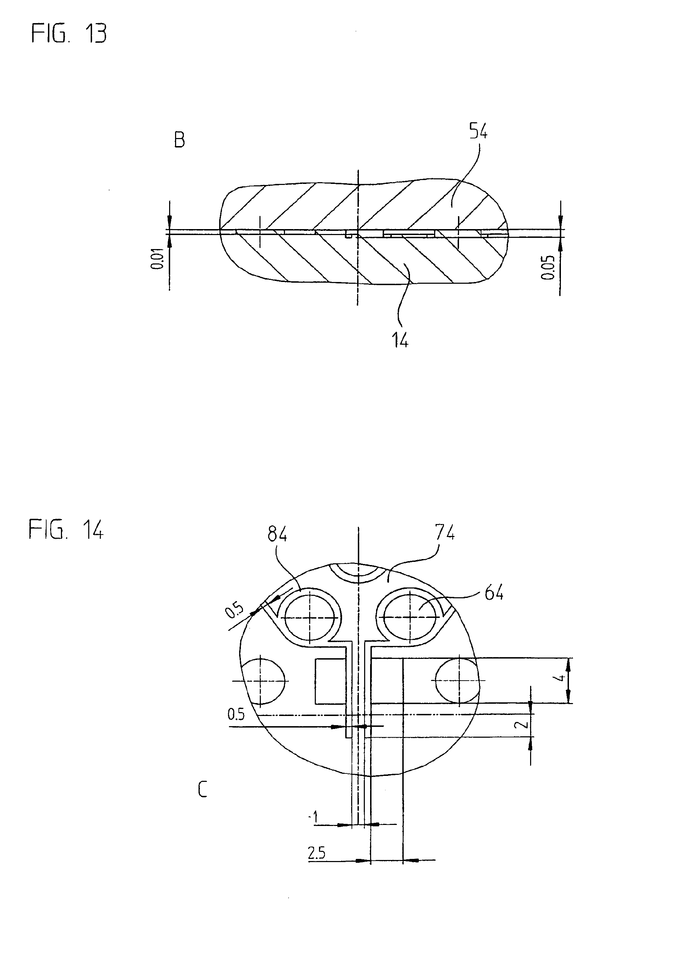

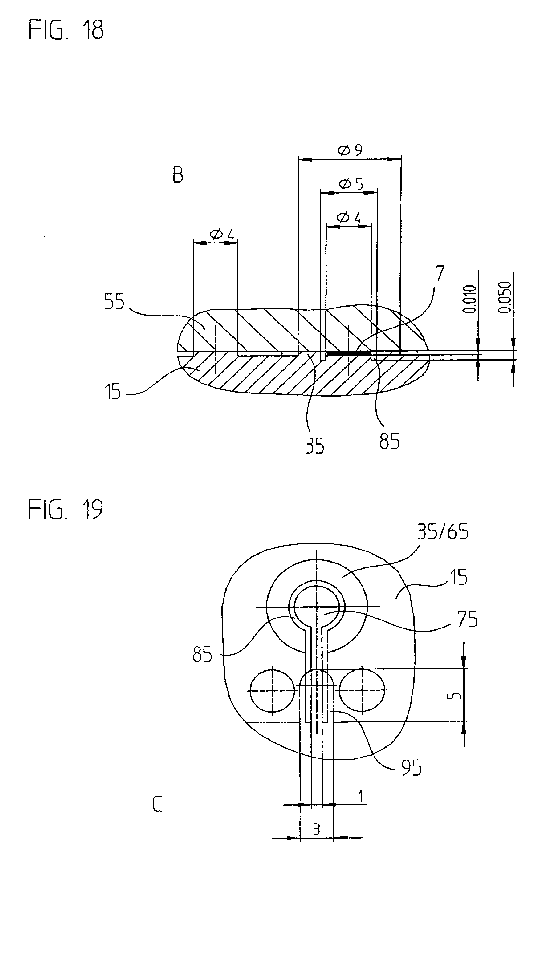

Nachfolgend werden zur Ergänzung des Ansprengens besonders vorteilhafte Klebeverbindungen anhand der Figuren 6 bis 19 erläutert. Dabei wird durch Vorspannung diskreter Ansprengflächen 63, insbesondere in der Randzone der Verbindung von Maßstab 13 und Träger 53, mittels Kleber 7 die Flächenpressung zwischen den Verbindungspartnern 13 und 53 erhöht.

Durch die Sicherung mittels Kleber 7 ist ein Absprengen und Verlieren der Maßstäbe 13 z.B. bei versehentlicher Berührung durch einen Montagearbeiter ausgeschlossen.

Die Kleberschicht erzeugt dabei allenfalls lokal minimale Verformungen des Maßstabs 13. Position und Ebenheit sind nach wie vor extrem präzise und weitgehend driftfrei durch die Ansprengverbindung gegeben.

Figur 6 zeigt einen an Randbereichen über den Träger 53 überstehenden Maßstab 13. Einige der keisringförmigen Erhebungen 33 des Maßstabs 13 sind zusätzlich mit einer Klebestelle versehen, von denen eine in Figur 7 im Querschnitt dargestellt ist. Zur Unterscheidung der nur angesprengten Erhebungen 32 und der zusätzlich durch Kleber 7 gesicherten Erhebungen 33 sind diese mit unterschiedlichen Bezugszeichen versehen und die mit Kleber 7 gesicherten Erhebungen 33 in Figur 6 geschwärzt dargestellt. Bei den mit Kleber 7 zusätzlich gesicherten Erhebungen 33 befindet sich innerhalb der kreisringförmigen Ansprengfläche 63 eine kreisförmige Klebefläche 73, die durch eine nutförmige Vertiefung 83 als Kleberstopp von der Ansprengfläche 63 getrennt ist. Dadurch wird verhindert, dass beim Einbringen des Klebers 7 dieser in die Ansprengfläche 63 gelangt.

Aus Gründen der Übersichtlichkeit ist die Messteilung nicht mehr dargestellt.

Die Herstellung der gegenüber der Ansprengfläche 63 tiefer liegenden Bereiche, also der Klebeflächen 73 und der Vertiefungen 83 erfolgt beispielsweise auf lithographischem Weg. Alternativ ist auch eine mechanische Bearbeitung, beispielsweise Fräsen oder bei entsprechendem Werkstoff Laserbearbeitung denkbar.

Die Klebefläche 73 und der E-Modul des Klebers 7 sollten nur so groß wie unbedingt notwendig gehalten werden, um die Biegeverformung des Maßstabs 13 durch Zugkräfte nach der Kleberaushärtung -bedingt durch Schrumpfung des Klebers 7- nur so groß wie erforderlich, aber so klein wie möglich zu halten.

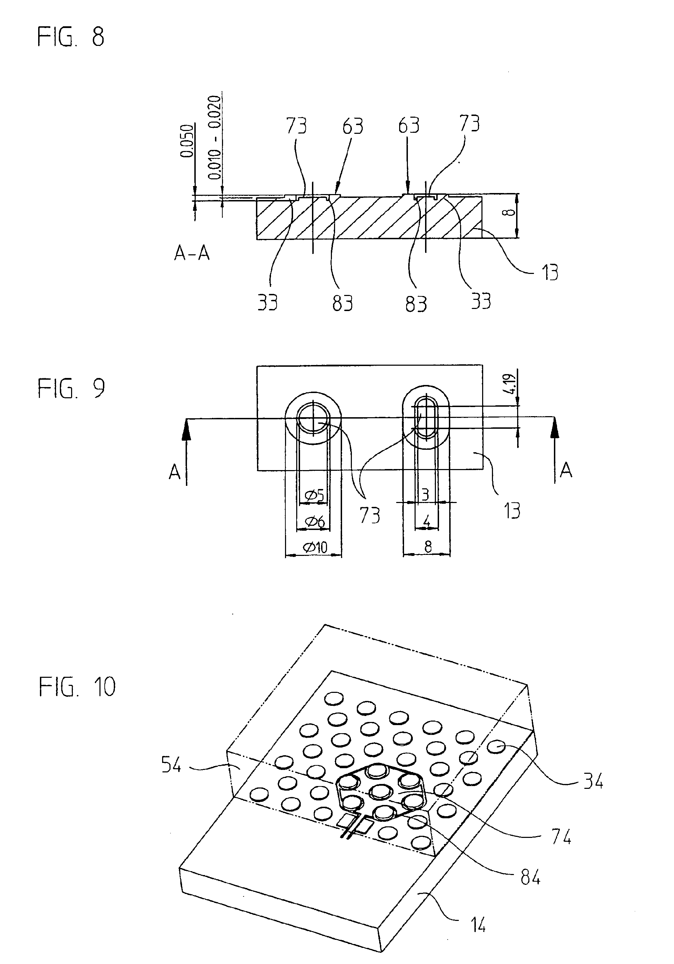

Vernachlässigbare kurzperiodische Durchbiegung des Maßstabs 13 kann bei gleicher Größe der Klebefläche 73 auch durch eine in Figur 8 und 9 jeweils auf der rechten Seite dargestellten ovalen Form der Ansprengfläche 63 sowie der Klebefläche 73 erreicht werden. Unabhängig von der konstruktiven Ausgestaltung kommt es darauf an, dass die vom Kleber 7 beim Aushärten aufgeprägten Kräfte mit möglichst kurzem Stützabstand und möglichst rundum abgefangen werden, was durch die die Klebefläche 73 umgebende Erhebung bzw. Ansprengfläche 63 gewährleistet ist.

Arbeitsablauf für das Ansprengen und die Klebersicherung:
- in Kontakt bringen des Maßstabs 13 mit dem Träger 53
- Justieren des Maßstabs 13 am Träger 53, wobei das Justieren erleichtert werden kann, indem z. B. über die Bohrung 93 ein Gas, z. B. Luft in den Zwischenraum von Maßstab 13 und Träger 53 eingebracht wird um ein Ansprengen in diesem Zustand zu verhindern
- Andrücken des Maßstabs 13 am Träger 53 und damit Ansprengen des Maßstabs 13 im justierten Zustand, wobei das Andrücken durch Erzeugen eines Vakuums (Evakuieren) im Zwischenraum von Maßstab 13 und Träger 53 generiert werden kann
- Einbringen des Klebers 7 zur Klebefläche 73 über Bohrungen 93 im Träger 53.

Um Formänderungen des Maßstabs 13 im Messbetrieb durch Schrumpfen oder Quellen des Klebers 7, z. B. durch Änderung der Luftfeuchtigkeit, zu verhindern, kann die Bohrung 93 nach dem Einbringern des Klebers 7 luftdicht verschlossen werden. Alternativ kann über die Bohrung 93 nach erfolgtem Ansprengen ein Gas mit definierter Feuchtigkeit (z. B. Stickstoff oder Helium) in den Zwischenraum von Maßstab 13 und Träger 53 und somit zu den Klebeflächen 73 geleitet werden, um eine Alterung des Klebers 7 zu verhindern.

Bei Verwendung eines geeigneten Klebers 7 kann die klebergesicherte Ansprengverbindung im Wartungsfall z. B. durch Erwärmen des Klebers 7 oder durch Cracken mit Hilfe von Licht definierter Wellenlänge oder durch chemische Mittel gelöst werden. Beim Lösen durch Erwärmen kann ein Heizstab in die Bohrung 93 eingeführt werden, um die Klebefläche 73 lokal aufzuheizen. Beim Lösen durch Einsatz eines chemischen Lösungsmittels kann dieses ebenfalls durch die Bohrung 93 eingebracht werden. Alternativ oder zusätzlich kann über die Bohrung 93 im Zwischenraum von Maßstab 13 und Träger 53 ein Druck aufgebaut werden, um die Ansprengverbindung zu lösen.

Die nachfolgenden Beispiele gemäß der Figuren 10 bis 19 zeigen vorteilhafte Varianten, die das Einbringen des Klebers 7 erleichtern.

Bei dem Ausführungsbeispiel gemäß der Figuren 10 bis 14 wird der Kleber 7 vom Rand des Maßstabs 14 bzw. des Trägers 54 andosiert und zieht durch Kapillarkräfte in die Klebefläche 74. Die nutförmigen bzw. rillenförmigen Vertiefungen 84 zwischen den Oberflächen 64 der noppenförmigen Erhebungen 34 und der Klebeflächen 74 verhindert Kleberkontakt zur Ansprengfläche 64.

Die Abstützung durch Ansprengflächen 64 in unmittelbarer Nähe des Dosierkanals sowie innerhalb des Klebebereichs, gebildet durch die Klebeflächen 74, ist gewährleistet. Die Vertiefungen 84 verhindern den Kontakt von Kleber 7 zu den Ansprengflächen 64 (Absprengen durch einziehenden Kleber 7 wird verhindert).

Bei dem Ausführungsbeispiel gemäß der Figuren 15 bis 19 ist im Träger 55 eine Ausnehmung 95 eingebracht, die zum Einbringen des Klebers 7 an die Klebefläche 75 dient. Der Kleber 7 zieht durch Kapillarwirkung von der Ausnehmung 95 ausgehend zur Klebefläche 75. Dadurch wird ein schrumpfender Kleberpunkt am überstehenden Bereich des Maßstabs 15 vermieden und der Kleber 7 kann den überstehenden Maßstab 15 nicht herunterziehen.

Bei allen Ausführungsbeispielen kann der Träger 55 zum Rand hin eine Verjüngung 100 aufweisen. Der Träger 55 ist damit weicher und übt Verformungen des überstehenden Maßstabs 15 mit aus. Das Risiko des Ablösens im Randbereich wird dadurch verringert. Ein Ausführungsbeispiel ist in Figur 15 dargestellt.

Eine Verjüngung 100 des Randbereiches des Trägers 51 bis 55 ist mit und ohne zusätzlicher Kleberfixierung zur Verbesserung der Ansprengstabilität einsetzbar.

Die von den Erhebungen 33 bis 35 gebildeten Auflageflächen 63 bis 65, die die Klebefläche(n) 73 bis 75 umschließen, sollten um die Klebefläche 73 bis 75 herum möglichst symmetrisch angeordnet werden. Dadurch wird ebenfalls die Deformation der Teilungsoberfläche gering gehalten.

Die noppenförmigen Erhebungen 31 bis 35 sind durch bis nach außen führende Kanäle 200 in einer ansonsten flächigen Ansprengfläche voneinander getrennt (Entweichen der Luft aus dem Zwischenraum; Verbesserung des Ansprengverhaltens). Es sind diverse Mischungen von Flächen/Noppen/Rillen mit oder ohne Klebestopp-Vertiefungen 83, 84, 85 denkbar.

Um die Bondverbindungen vor äußeren Einflüssen und Unterkriechen zu schützen, kann nach der Herstellung der Bondverbindung der Zwischenraum zwischen dem Maßstab 11 bis 15 und dem Träger 51 bis 55 durch Randversiegelung am Umfang des Maßstabs 11 bis 15 abgedichtet werden. Dazu können Lacke oder Klebestoffe verwendet werden. Ein Schutz kann auch erreicht werden, indem der Zwischenraum mittels eines Mediums geflutet wird, wozu beispielsweise ein Gas definierter Eigenschaften in den Raum zwischen den Erhebungen 31 bis 35, also in die Kanäle 200 eingebracht wird und diesen durchströmt.

Bei den oben dargestellten Beispielen sind die voneinander beabstandeten Erhebungen 31 bis 35 in Form von Noppen einstückig am Maßstab 11 bis 15 ausgebildet. Die Erhebungen 31 bis 35 können alternativ oder zusätzlich auch am Träger 51 bis 55 ausgebildet sein. Die Erhebungen 31 bis 35 können auch von einer auf den Maßstab 11 bis 15 oder den Träger 51 bis 55 aufgebrachten und strukturierten Schicht gebildet sein.

Die Form und Anordnung der Erhebungen 31 bis 35 ist nicht auf die dargestellten Ausführungen beschränkt.

Allen Bondverfahren der Erfindung ist gemeinsam, dass die zu verbindenden Oberflächen 61 bis 65; 41 bis 45 bis auf wenige Atomabstände zueinander gebracht werden, um entweder durch Vander-Waals-Kräfte aneinander gezogen werden zu können (Direktbonden), oder aber durch Aufbau weniger Atomlagen in Form einer Zwischenverbindung eine atomare Verbindung herstellen zu können (LTB, anodisches Bonden).

Die in den Zeichnungen angegebenen Maße sind in mm angegeben und zeigen nur beispielhaft die Größenordnungen.

## Patentansprüche

1. Verfahren zum Befestigen eines Maßstabs (12 bis 15) an einen Träger (51 bis 55) durch Herstellen einer Bondverbindung zwischen dem Maßstab (11 bis 15) und dem Träger (51 bis 55), **dadurch gekennzeichnet, dass** die Bondverbindung an mehreren in einem zweidimensionalen Raster verteilt angeordneten und voneinander beabstandeten Oberflächenbereichen (61 bis 65) des Maßstabs (11 bis 15) ausgeführt wird, die durch zumindest einen Kanal (200) voneinander getrennt sind.

2. Verfahren nach Anspruch 1, **dadurch gekennzeichnet, dass** die Bondverbindung durch Direktbonden, Low-Temperature-Bonding oder anodisches Bonden erfolgt.

3. Verfahren nach Anspruch 1 oder 2, **dadurch gekennzeichnet, dass** die Oberflächenbereiche (61 bis 65) geometrisch gleichmäßig in einem regelmäßigen Raster verteilt oder statistisch verteilt angeordnet sind.

4. Verfahren nach einem der Ansprüche 1 bis 3, **dadurch gekennzeichnet, dass** die Oberflächenbereiche (61 bis 65) von Erhebungen (31 bis 35) gebildet werden, die einen gegenseitigen Abstand von weniger als die Dicke des Maßstabs (11 bis 15) aufweisen..

5. Verfahren nach einem der vorhergehenden Ansprüche, **dadurch gekennzeichnet, dass** zusätzlich zur Bondverbindung eine weitere Verbindung ausgeführt wird.

6. Verfahren nach Anspruch 5, **dadurch gekennzeichnet, dass** diese weitere Verbindung eine Klebeverbindung ist, indem zwischen dem Maßstab (13, 14, 15) und dem Träger (53, 54, 55) ein Kleber (7) eingebracht wird.

7. Träger mit einem Maßstab, wobei der Maßstab (11 bis 15) am Träger (51 bis 55) durch Bonden befestigt ist, **dadurch gekennzeichnet, dass** das Bonden an mehreren in einem zweidimensionalen Raster verteilt angeordneten und voneinander beabstandeten Oberflächenbereichen (61 bis 65) des Maßstabs (11 bis 15) ausgeführt ist, die durch zumindest einen Kanal (200) voneinander getrennt sind.

8. Träger mit einem Maßstab nach Anspruch 7, **dadurch gekennzeichnet, dass** am Maßstab (11 bis 15) und/oder am Träger (51 bis 55) Erhebungen (31 bis 35) ausgebildet sind, welche die voneinander beabstandeten Oberflächenbereiche (61 bis 65) bilden.

9. Träger mit einem Maßstab nach Anspruch 8, **dadurch gekennzeichnet, dass** die Erhebungen (31 bis 35) geometrisch gleichmäßig in einem regelmäßigen Raster verteilt oder statistisch verteilt angeordnet sind.

10. Träger mit einem Maßstab nach Anspruch 8 oder 9, **dadurch gekennzeichnet, dass** die Oberflächenbereiche (61 bis 65) von Erhebungen (31 bis 35) gebildet werden, die einen gegenseitigen Abstand von weniger als die Dicke des Maßstabs (11 bis 15) aufweisen.

11. Träger mit einem Maßstab nach einem der Ansprüche 7 bis 10, **dadurch gekennzeichnet, dass** die Erhebungen (31 bis 35) eine kreisringförmige oder ovale Form aufweisen.

12. Träger mit einem Maßstab nach einem der Ansprüche 7 bis 11, **dadurch gekennzeichnet, dass** zusätzlich zur Bondverbindung eine weitere Verbindung vorgesehen ist.

13. Träger mit einem Maßstab nach Anspruch 12, **dadurch gekennzeichnet, dass** die zusätzliche Verbindung eine Klebeverbindung ist, bei der zwischen dem Maßstab (13, 14, 15) und dem Träger (53, 54, 55) Klebeflächen (73, 74, 75) mit einem Kleber (7) vorgesehen sind.

14. Träger mit einem Maßstab nach Anspruch 13, **dadurch gekennzeichnet, dass** die Klebeflächen (73, 74, 75) jeweils von den Erhebungen (33, 34, 35) durch eine nutförmige Vertiefung (83, 84, 85) getrennt sind.

15. Träger mit einem Maßstab nach Anspruch 14, **dadurch gekennzeichnet, dass** der Träger (53, 54, 55) den Maßstab (13, 14, 15) an den Erhebungen (33, 34, 35) direkt kontaktiert, die Klebeflächen (73, 74, 75) gegenüber den Erhebungen (33, 34, 35) zurückgesetzt angeordnet sind, so dass sich zwischen dem Maßstab (13, 14, 15) und dem Träger (53, 54, 55) ein Spalt zum Aufnehmen des Klebers (7) ergibt, und dass die nutförmigen Vertiefungen (83, 84, 85) gegenüber den Klebeflächen (73, 74, 75) zurückgesetzt angeordnet sind.

16. Träger mit einem Maßstab nach einem der Ansprüche 13 bis 15, **dadurch gekennzeichnet, dass** im Träger (53, 55) zumindest eine Öffnung (93, 95) zum Einbringen des Klebers (7) an die Klebefläche (73, 75) vorgesehen ist.

17. Träger mit einem Maßstab nach einem der Ansprüche 13 bis 15, **dadurch gekennzeichnet, dass** die Klebefläche (74, 75) bis zu einem Rand des Maßstabs (14, 15) und/oder des Trägers (54, 55) geführt ist, und derart ausgebildet ist, dass der Kleber (7) durch Kapillarkräfte vom Rand her zu vom Rand entfernt liegenden Klebeflächen (74, 75) gelangt.

18. Träger mit einem Maßstab nach einem der Ansprüche 7 bis 17, **dadurch gekennzeichnet, dass** der Träger (55) zu seinem Rand hin eine Verjüngung (100) aufweist.

19. Maßstab mit einer Befestigungsfläche zum Befestigen an einen Träger (5, 50), **dadurch gekennzeichnet, dass** die Befestigungsfläche von voneinander beabstandeten in einem zweidimensionalen Raster verteilt angeordneten Erhebungen (3, 30) gebildet ist, wobei die Erhebungen (3, 30) jeweils eine bondbare Oberfläche (6, 60) zum Herstellen einer Bondverbindung mit einer Gegenfläche (4, 40) des Trägers (5, 50) aufweisen.

20. Maßstab nach Anspruch 19, **dadurch gekennzeichnet, dass** die Erhebungen (31 bis 35) geometrisch gleichmäßig in einem regelmäßigen Raster verteilt oder statistisch verteilt angeordnet sind.

21. Maßstab nach Anspruch 19 oder 20, **dadurch gekennzeichnet, dass** die Oberflächenbereiche (61 bis 65) von Erhebungen (31 bis 35) gebildet werden, die einen gegenseitigen Abstand von weniger als die Dicke des Maßstabs (11 bis 15) aufweisen.

22. Maßstab nach einem der Ansprüche 19 bis 21, **dadurch gekennzeichnet, dass** die Erhebungen (31 bis 35) eine kreisringförmige oder ovale Form aufweisen.

23. Maßstab nach einem der Ansprüche 19 bis 22, **dadurch gekennzeichnet, dass** er zur zweidimensionalen Positionsmessung eine zweidimensionale Messteilung (22) aufweist.

## Claims

1. Method for fixing a scale (12 to 15) to a support (51 to 55) by producing a bonded connection between the scale (11 to 15) and the support (51 to 55), **characterized in that** the bonded connection is effected at multiple surface regions (61 to 65) of the scale (11 to 15) which are arranged distributed in a two-dimensional grid and are spaced apart from one another and which are separated from one another by at least one channel (200).

2. Method according to Claim 1, **characterized in that** the bonded connection is performed by direct bonding, low-temperature bonding or anodic bonding.

3. Method according to Claim 1 or 2, **characterized in that** the surface regions (61 to 65) are geometrically arranged uniformly distributed in a regular grid or randomly distributed.

4. Method according to one of Claims 1 to 3, **characterized in that** the surface regions (61 to 65) are formed by elevations (31 to 35), which have a mutual spacing of less than the thickness of the scale (11 to 15).

5. Method according to one of the preceding claims, **characterized in that**, in addition to the bonded connection, a further connection is effected.

6. Method according to Claim 5, **characterized in that** this further connection is an adhesive connection, **in that** an adhesive (7) is introduced between the scale (13, 14, 15) and the support (53, 54, 55).

7. Support with a scale, the scale (11 to 15) being fixed to the support (51 to 55) by bonding, **characterized in that** the bonding is effected at multiple surface regions (61 to 65) of the scale (11 to 15) which are arranged distributed in a two-dimensional grid and are spaced apart from one another and which are separated from one another by at least one channel (200).

8. Support with a scale according to Claim 7, **characterized in that** elevations (31 to 35) that form the spaced-apart surface regions (61 to 65) are formed on the scale (11 to 15) and/or on the support (51 to 55).

9. Support with a scale according to Claim 8, **characterized in that** the elevations (31 to 35) are geometrically arranged uniformly distributed in a regular grid or randomly distributed.

10. Support with a scale according to Claim 8 or 9, **characterized in that** the surface regions (61 to 65) are formed by elevations (31 to 35), which have a mutual spacing of less than the thickness of the scale (11 to 15).

11. Support with a scale according to one of Claims 7 to 10, **characterized in that** the elevations (31 to 35) have an annular or oval form.

12. Support with a scale according to one of Claims 7 to 11, **characterized in that**, in addition to the bonded connection, a further connection is provided.

13. Support with a scale according to Claim 12, **characterized in that** the additional connection is an adhesive connection, in which adhesive areas (73, 74, 75) between the scale (13, 14, 15) and the support (53, 54, 55) are provided with an adhesive (7).

14. Support with a scale according to Claim 13, **characterized in that** the adhesive areas (73, 74, 75) are respectively separated from the elevations (33, 34, 35) by a groove-shaped depression (83, 84, 85).

15. Support with a scale according to Claim 14, **characterized in that** the support (53, 54, 55) contacts the scale (13, 14, 15) directly at the elevations (33, 34, 35), the adhesive areas (73, 74, 75) are arranged set back with respect to the elevations (33, 34, 35), so that a gap for receiving the adhesive (7) is obtained between the scale (13, 14, 15) and the support (53, 54, 55), and **in that** the groove-shaped depressions (83, 84, 85) are arranged set back with respect to the adhesive areas (73, 74, 75).

16. Support with a scale according to one of Claims 13 to 15, **characterized in that** at least one opening (93, 95) for introducing the adhesive (7) to the adhesive area (73, 75) is provided in the support (53, 55).

17. Support with a scale according to one of Claims 13 to 15, **characterized in that** the adhesive area (74, 75) is taken up to an edge of the scale (14, 15) and/or of the support (54, 55), and is formed in such a way that the adhesive (7) passes from the edge to the adhesive areas (74, 75) remote from the edge by capillary forces.

18. Support with a scale according to one of Claims 7 to 17, **characterized in that** the support (55) has a taper (100) towards its edge.

19. Scale with a fixing area for fixing to a support (5, 50), **characterized in that** the fixing area is formed by elevations (3, 30), which are spaced apart from one another and distributed in a two-dimensional grid, the elevations (3, 30) respectively having a bondable surface (6, 60) for producing a bonded connection with a mating surface (4, 40) of the support (5, 50).

20. Scale according to Claim 19, **characterized in that** the elevations (31 to 35) are geometrically arranged uniformly distributed in a regular grid or randomly distributed.

21. Scale according to Claim 19 or 20, **characterized in that** the surface regions (61 to 65) are formed by elevations (31 to 35), which have a mutual spacing of less than the thickness of the scale (11 to 15).

22. Scale according to one of Claims 19 to 21, **characterized in that** the elevations (31 to 35) have an annular or oval form.

23. Scale according to one of Claims 19 to 22, **characterized in that** it has a two-dimensional measuring graduation (22) for two-dimensional position measurement.

## Revendications

1. Procédé pour la fixation d'une échelle (12 à 15) sur un support (51 à 55) par établissement d'une connexion par liaison entre l'échelle (11 à 15) et le support (51 à 55), **caractérisé en ce que** la connexion par liaison est réalisée au niveau de plusieurs régions de surface (61 à 65) de l'échelle (11 à 15) réparties dans une trame bidimensionnelle et espacées les unes des autres, lesquelles sont séparées les unes des autres par au moins un canal (200).

2. Procédé selon la revendication 1, **caractérisé en ce que** la connexion par liaison s'effectue par liaison directe, liaison à faible température ou liaison anodique.

3. Procédé selon la revendication 1 ou 2, **caractérisé en ce que** les régions de surface (61 à 65) sont réparties géométriquement uniformément dans une trame régulière ou sont réparties statistiquement.

4. Procédé selon l'une quelconque des revendications 1 à 3, **caractérisé en ce que** les régions de surface (61 à 65) sont formées par des rehaussements (31 à 35) qui présentent un espacement mutuel inférieur à l'épaisseur de l'échelle (11 à 15).

5. Procédé selon l'une quelconque des revendications précédentes, **caractérisé en ce qu'**une connexion supplémentaire est réalisée en plus de la connexion par liaison.

6. Procédé selon la revendication 5, **caractérisé en ce que** cette connexion supplémentaire est une connexion adhésive, un adhésif (7) étant introduit entre l'échelle (13, 14, 15) et le support (53, 54, 55).

7. Support comprenant une échelle, l'échelle (11 à 15) étant fixée sur le support (51 à 55) par liaison, **caractérisé en ce que** la liaison est réalisée au niveau de plusieurs régions de surface (61 à 65) de l'échelle (11 à 15) réparties dans une trame bidimensionnelle et espacées les unes des autres, lesquelles sont séparées les unes des autres par au moins un canal (200).

8. Support comprenant une échelle selon la revendication 7, **caractérisé en ce que** des rehaussements (31 à 35) sont réalisés au niveau de l'échelle (11 à 15) et/ou au niveau du support (51 à 55), lesquels rehaussements forment les régions de surface espacées les unes des autres (61 à 65).

9. Support comprenant une échelle selon la revendication 8, **caractérisé en ce que** les rehaussements (31 à 35) sont répartis géométriquement uniformément dans une trame régulière ou sont répartis statistiquement.

10. Support comprenant une échelle selon la revendication 8 ou 9, **caractérisé en ce que** les régions de surface (61 à 65) sont formées par des rehaussements (31 à 35) qui présentent un espacement mutuel inférieur à l'épaisseur de l'échelle (11 à 15).

11. Support comprenant une échelle selon l'une quelconque des revendications 7 à 10, **caractérisé en ce que** les rehaussements (31 à 35) présentent une forme annulaire circulaire ou ovale.

12. Support comprenant une échelle selon l'une quelconque des revendications 7 à 11, **caractérisé en ce qu'**une connexion supplémentaire est prévue en plus de la connexion par liaison.

13. Support comprenant une échelle selon la revendication 12, **caractérisé en ce que** la connexion supplémentaire est une connexion adhésive, dans laquelle des surfaces adhésives (73, 74, 75) pourvues d'un adhésif (7) sont prévues entre l'échelle (13, 14, 15) et le support (53, 54, 55).

14. Support comprenant une échelle selon la revendication 13, **caractérisé en ce que** les surfaces adhésives (73, 74, 75) sont à chaque fois séparées des rehaussements (33, 34, 35) par un renfoncement en forme de rainure (83, 84, 85).

15. Support comprenant une échelle selon la revendication 14, **caractérisé en ce que** le support (53, 54, 55) vient en contact directement avec l'échelle (13, 14, 15) au niveau des rehaussements (33, 34, 35), les surfaces adhésives (73, 74, 75) sont disposées en retrait par rapport aux rehaussements (33, 34, 35), de telle sorte qu'entre l'échelle (13, 14, 15) et le support (53, 54, 55) soit formée une fente pour recevoir l'adhésif (7), et **en ce que** les renfoncements en forme de rainure (83, 84, 85) sont disposés en retrait par rapport aux surfaces adhésives (73, 74, 75).

16. Support comprenant une échelle selon l'une quelconque des revendications 13 à 15, **caractérisé en ce qu'**au moins une ouverture (93, 95) pour l'introduction de l'adhésif (7) au niveau de la surface adhésive (73, 75) est prévue dans le support (53, 55).

17. Support comprenant une échelle selon l'une quelconque des revendications 13 à 15, **caractérisé en ce que** la surface adhésive (74, 75) est guidée jusqu'à un bord de l'échelle (14, 15) et/ou du support (54, 55), et est réalisée de telle sorte que l'adhésif (7) parvienne sous l'effet de forces capillaires depuis le bord jusqu'aux surfaces adhésives (74, 75) situées à distance du bord.

18. Support comprenant une échelle selon l'une quelconque des revendications 7 à 17, **caractérisé en ce que** le support (55) présente un rétrécissement (100) en direction de son bord.

19. Échelle comprenant une surface de fixation pour la fixation à un support (5, 50), **caractérisée en ce que** la surface de fixation est formée par des rehaussements (3, 30) répartis de manière espacée les uns des autres dans une trame bidimensionnelle, les rehaussements (3, 30) présentant à chaque fois une surface pouvant être liée (6, 60) pour établir une connexion par liaison avec une surface conjuguée (4, 40) du support (5, 50).

20. Échelle selon la revendication 19, **caractérisée en ce que** les rehaussements (31 à 35) sont répartis géométriquement uniformément dans une trame régulière ou sont répartis statistiquement.

21. Échelle selon la revendication 19 ou 20, **caractérisée en ce que** les régions de surface (61 à 65) sont formées par des rehaussements (31 à 35) qui présentent un espacement mutuel inférieur à l'épaisseur de l'échelle (11 à 15).

22. Échelle selon l'une quelconque des revendications 19 à 21, **caractérisée en ce que** les rehaussements (31 à 35) présentent une forme annulaire circulaire ou ovale.

23. Échelle selon l'une quelconque des revendications 19 à 22, **caractérisée en ce qu'**elle présente, pour la mesure de positions bidimensionnelles, une division d'échelle bidimensionnelle (22).
